# EUROPÄISCHE PATENTANMELDUNG

(11) **EP 4 506 145 A1**
(43) Veröffentlichungstag der Anmeldung: **12.02.2025**
(21) Anmeldenummer: 23190606.6
(22) Anmeldetag: 09.08.2023
(51) Int. Cl.: B29C 65/18, B29C 65/56, B29C 65/72, B29C 65/00, B29D 23/20, B29C 41/20, B65D 35/10, B65D 35/12, B29L 23/20, B29C 43/18

(54) **VORRICHTUNG UND VERFAHREN ZUM AUSBILDEN EINES TUBENKOPFES DURCH VERPRESSEN EINES VORFORMLINGS UND VERBINDEN DES TUBENKOPFES MIT EINEM TUBENKÖRPER ZUR HERSTELLUNG EINER VERPACKUNGSTUBE**

(71) Anmelder: PackSys Global AG, 8630 Rüti (CH)
(72) Erfinder: ASILNYA, Shahram, 6166 Hasle (CH); LÄUBLI, Julius, 8645 Jona (CH)
(74) Vertreter: Patent- und Rechtsanwälte Behrmann Wagner PartG mbB

(57) **Zusammenfassung**

Die Erfindung betrifft eine Vorrichtung und Verfahren zum Ausbilden eines Tubenkopfes durch Verpressen eines Vorformlings (4) und Verbinden des Tubenkopfes mit einem Tubenkörper (5) zur Herstellung einer Verpackungstube, mit einem eine erste Bearbeitungsstation ausbildenden mehrteiligen Formgebungswerkzeug (1), insbesondere umfassend eine Patrize (3) und eine mehrteilige Matrize (2), in welches in einem geöffneten Zustand ein Vorformling (4) und ein Tubenkörper (5) einbringbar ist und welches bei einem Übergang in einen geschlossenen Zustand den Tubenkopf aus dem Vorformling (4) ausformt und die Verbindung mit dem Tubenkörper (5) herstellt, wobei das Formgebungswerkzeug Kühleinrichtungen ( 6) aufweist, mit denen Teile des Formgebungswerkzeugs (1) kühlbar sind, wobei das Formgebungswerkzeug (1) ferner ein äußeres Schulterteil (7) umfasst, welches in dem geschlossenen Zustand, bevorzugt radial außen, benachbart zu einem axialen Endabschnitt (23) des Tubenkörpers (5) angeordnet ist, wobei das äußere Schulterteil (7) eine Heizeinrichtung (9, 12, 13) aufweist, die so angeordnet und ausgebildet ist, dass der axiale Endabschnitt (23) des Tubenkörpers (5) bei einer Annäherung an das äußere Schulterteil (7) und/oder bei einem Kontakt mit dem äußeren Schulterteil (7) erwärmt wird.

## Beschreibung

Bei der Herstellung von Verpackungstuben sind unterschiedliche Vorgehensweisen bekannt. Oftmals wird zunächst ein Tubenkörper hergestellt und dieser dann mit einem Tubenkopf verbunden, wobei der Tubenkopf eine Auslassöffnung ausbildet und/oder einen Verschluss umfasst oder Mittel zur Befestigung eines Verschlusses aufweist. Die Tubenkörper sind meist zylindrische oder annähernd zylindrische Rohrstücke oder Hohlkörper, die ihrerseits auf verschiedene Wege hergestellt werden können. Einerseits ist es verbreitet die Tubenkörper aus einem bogenförmigen Material, beispielsweise einem Laminat herzustellen, welches zu einer Rohrform mit aneinander angrenzenden oder überlappenden Längsrandseiten umgeformt und in Längsrichtung entlang der Längsrandseiten verbunden, beispielsweise verschweißt, wird. Nach dem Umformen und Verschweißen des bogenförmigen Materials findet regelmäßig eine Vereinzelung zur einzelnen Tubenkörpern statt.

Alternativ sind auch Extrusionsverfahren und Spritzgussverfahren zur Herstellung von Tubenkörpern bekannt, die gegebenenfalls auf geeignete Art und Weise mit einem Tubenkopf verbunden werden.

Zur Verbindung des Tubenkopfes mit einem Tubenkörper sind im Stand der Technik bereits Ansätze bekannt, bei denen im Wesentlichen gleichzeitig oder zumindest zeitlich überlappend die Ausbildung des Tubenkopfes durch Verpressen eines Vorformlings in einem entsprechenden Formgebungswerkzeug und die Verbindung des Tubenkopfes mit dem Tubenkörper stattfindet. Dazu kommen beispielsweise Formpressverfahren zum Einsatz (Compression Moulding). Dabei wird der Tubenkörper entlang einer Längsrichtung auf einen inneren Teil eines mehrteiligen Formgebungswerkzeuges aufgesteckt. Der innere Teil des Formgebungswerkzeuges ist auch als Patrize, Dorn oder Mandrel bekannt und kann ebenfalls mehrteilig ausgeführt sein.

Auf dieses innere Teil des Formgebungswerkzeuges wird dann ein Vorformling, beispielsweise aus erhitztem/erwärmtem Kunststoff, bevorzugt in einer Ringgeometrie oder einer Donutgeometrie aufgetragen, bevor das mehrteilige Formgebungswerkzeug von außen durch weitere Werkzeugteile verschlossen wird oder in einen geschlossenen Zustand überführt wird. Es sind auch Formgebungswerkzeuge bekannt, die im Vergleich zur vorstehenden Ausführung "auf dem Kopf stehen". In diesem Fall wird der Vorformling in den äußeren Teil des Formgebungswerkzeugs eingebracht und der innere Teil wird von oben eingeführt. Für die Wirkung der vorliegenden Erfindung ist es unbedeutend, wie das Formgebungswerkzeug ausgerichtet ist. Durch eine entsprechende Kavität im Inneren des Formgebungswerkzeugs im geschlossenen Zustand, in den auch ein axialer Endabschnitt des Tubenkörpers im geschlossenen Zustand des Formgebungswerkzeugs hineinragt wird beim Schließen und während des geschlossenen Zustands des Formgebungswerkzeugs der Vorformling in den Tubenkopf umgeformt oder ausgeformt, insbesondere verpresst und gleichzeitig mit dem axialen Endabschnitt des Tubenkörpers verbunden.

Um ein möglichst schnelles und sicheres Aushärten des ausgeformten oder gepressten Tubenkopfes sowie eine möglichst gute Verbindung zwischen dem ausgeformten oder verpressten Tubenkopf und dem Tubenkörper herzustellen, wurde im Stand der Technik bisher das mehrteilige Formgebungswerkzeug durch konturnahe Kühleinrichtungen, beispielsweise sowohl im Bereich des Innenteils, also der Patrize, dem Dorn oder Mandrel, als auch in den äußeren Teilen des Formgebungswerkzeugs, beispielsweise die mehrteilige Matrize des Formgebungswerkzeugs zur Ausbildung des Schulterbereichs des Tubenkopfes, des Halsbereichs des Tubenkopfes und des Endabschnitts des Tubenkopfes mit bevorzugt konturnahen Kühleinrichtungen gekühlt, um den erwärmt oder erhitzt aufgetragenen und dementsprechend verformbaren Vorformling, bevorzugt aus geschmolzenem Polymermaterial oder einer Polymerschmelze, zunächst gut verformen zu können und gleichzeitig möglichst schnell eine Verfestigung sowie eine stabile Verbindung, insbesondere Verschweißung mit dem Tubenkörper herzustellen.

Aufgrund der aktiv gekühlten Formgebungswerkzeuge des Stands der Technik und der dementsprechend großen Abkühlrate des Vorformlings nach dem in Kontaktbringen mit dem Formgebungswerkzeug macht dieses Vorgehen jedoch entsprechend hohe Ausgangstemperaturen oder Anfangstemperaturen aufseiten des erhitzten Vorformlings nötig.

Diese hohen Anfangstemperaturen verursachen verschiedene Nachteile. Einerseits wird der Gesamtvorgang dadurch entsprechend energieintensiv, weil einerseits der Vorformling auf eine höhere Anfangstemperatur oder Ausgangstemperatur erhitzt werden muss und weil gleichzeitig entsprechend viel Energie aufgewendet werden muss, um die Kühlung des mehrteiligen Formgebungswerkzeuges zu erreichen.

Außerdem haben die hohen Anfangstemperaturen den Nachteil, dass dadurch, beispielsweise bei nicht vermeidbaren Temperaturschwankungen im Erwärmungsprozess des Materials des Vorformlings, beispielsweise in einem Extruder, kritische Materialtemperaturen überschritten werden können, die zu ungewünschter Degradation, also vorzeitiger Alterung, in dem Material des Vorformlings, beispielsweise in dem Polymer oder der Polymerschmelze, führen, die ihrerseits wiederum dazu führen können, dass nach Erkalten und Erstarren des Materials des Vorformlings chemisch, optisch und/oder mechanisch ungewollte und negative Materialeigenschaften erzielt werden oder zurückbleiben. Weiterhin bringen hohe Anfangstemperaturen den Nachteil mit sich, dass die Zeit für die notwendige Kühlung des Tubenkopfmaterials bis die Entformungstemperatur erreicht ist, bei der der Tubenkopf eine ausreichende Festigkeit erreicht hat, lang ist, was nachteiligerweise die Taktzeit des Formgebungswerkzeugs erhöht.

Vor diesem Hintergrund ist es die Aufgabe der vorliegenden Erfindung eine Vorrichtung und ein Verfahren vorzuschlagen, welches die Nachteile im Stand der Technik überwindet und insbesondere ein energieeffizienteres und sichereres Verpressen des Vorformlings samt Ausbildung der Verbindung zum Tubenkörper zu ermöglichen.

Diese Aufgabe wird mit einer Vorrichtung zum Ausbilden eines Tubenkopfes durch Verpressen eines Vorformlings und Verbinden des Tubenkopfes mit einem Tubenkörper zur Herstellung einer Verpackungstube mit den Merkmalen des Anspruchs 1 gelöst. Im Hinblick auf ein Verfahren zur Ausbildung eines Tubenkopfes durch Verpressen eines Vorformlings und Verbinden des Tubenkopfes mit einem Tubenkörper zur Herstellung einer Verpackungstube wird die oben genannte Aufgabe mit den Merkmalen des Anspruchs 10 gelöst.

Vorteilhafte Ausführungsformen sind Gegenstand der nachfolgenden Beschreibung, der Figurenbeschreibung, der Figuren sowie der Unteransprüche.

Auch um unnötige Wiederholungen zu vermeiden oder zu minimieren sollen nachfolgend alle vorrichtungsmäßig offenbarten Merkmale auch als entsprechend verfahrensmäßig offenbart und beanspruchbar gelten, sowie umgekehrt.

Die Vorrichtung zum Ausbilden eines Tubenkopfes durch Verpressen eines Vorformlings und Verbinden des Tubenkopfes mit einem Tubenkörper zur Herstellung einer Verpackungstube umfasst ein eine erste Bearbeitungsstation ausbildendes mehrteiliges Formgebungswerkzeug, insbesondere umfassend eine Patrize, und eine mehrteilige Matrize, in welches in einem geöffneten Zustand ein Vorformling und ein Tubenkörper einbringbar ist und welches bei einem Übergang in einen geschlossenen Zustand den Tubenkopf aus dem Vorformling formt, insbesondere presst, und die Verbindung mit dem Tubenkörper herstellt, wobei das Formgebungswerkzeug Kühleinrichtungen aufweist, mit denen Teile des Formgebungswerkzeugs kühlbar sind, wobei das Formgebungswerkzeug, insbesondere die Matrize, ein äußeres, bevorzugt seinerseits mehrteiliges, Schulterteil umfasst, welches in dem geschlossenen Zustand, bevorzugt radial außen, benachbart zu einem axialen Endabschnitt des Tubenkörpers angeordnet ist

Erfindungsgemäß ist dabei vorgesehen, dass das äußere Schulterteil oder die äußeren Schulterteile eine Heizeinrichtung oder Heizeinrichtungen aufweist/aufweisen oder so ausgeführt ist, dass es sich beheizen lässt/sie sich beheizen lassen, so dass der axiale Endabschnitt des Tubenkörpers bei einer Annäherung an das äußere Schulterteil und/oder bei einem Kontakt mit dem äußeren Schulterteil erwärmt wird. Die Grundidee der Erfindung besteht darin, dass bei einer stellenweisen oder abschnittsweisen Beheizung des mehrteiligen Formgebungswerkzeuges gerade in den Bereichen oder Abschnitten, die mit dem axialen Endabschnitt des Tubenkörpers in Kontakt kommen oder an diesen angenähert werden, der entsprechend axiale Endabschnitt des Tubenkörpers vorgewärmt wird bevor und während der Vorformling in den Bereich des axialen Endabschnitts des Tubenkörpers verpresst oder verformt wird, wodurch wiederum eine bessere Verbindung zwischen dem verformten Vorformling oder dem bereits ausgebildeten Tubenkopf und dem axialen Endabschnitt des Tubenkörpers ausgebildet werden kann, selbst wenn der Vorformling mit einer deutlich niedrigeren Anfangstemperatur oder Initialtemperatur in das Formgebungswerkzeug eingebracht, bevorzugt auf eine Patrize des Formgebungswerkzeugs aufgetragen wird. Dadurch wird ermöglicht, dass weniger Energie aufgebracht werden muss, um den Vorformling auf die Anfangstemperatur zu erhitzen. Gleichzeitig wird dadurch erreicht, dass ein größerer Abstand zwischen der Anfangstemperatur oder Initialtemperatur des Vorformlings und kritischen Temperaturen des Materials eingehalten werden kann, sodass sichergestellt wird, dass das Erwärmen des Vorformlings auf die Anfangstemperatur nicht zur Degeneration, Zersetzungen, Verfärbungen oder sonstigen negativen Einfluss auf das Material führt, die im erkalteten oder ausgehärteten Tubenkopf zurückbleiben oder zurückbleiben können. Die niedrigere Temperatur erfordert außerdem eine kürzere Kühlzeit bis eine ausreichende Festigkeit erreicht ist und die Tube entformt werden kann. Über die auf diese Weise verkürzte Taktzeit steigt der Durchsatz des Formgebungswerkzeugs.

Sofern die Heizung des äußeren Schulterteils extern oder indirekt bereitgestellt wird, beispielsweise über eine induktive Heizung, kann vorgesehen sein, dass die Bearbeitungsstation, bevorzugt in räumlicher Nähe zu dem Schulterteil oder den Schulterteilen, entsprechende Induktionsmittel, insbesondere Induktionsspulen, umfasst. Die Induktionsmittel können vorteilhaft so mit dem Werkzeug verbunden sein, dass diese beim Öffnen und Schließen mit den Werkzeugteilen mitbewegt werden. Dadurch entsteht eine minimale Beabstandung zu dem zu erwärmenden Bereich des äußeren Schulterteils. Alternativ kann auch vorgesehen sein, dass die Induktionsmittel im geschlossenen Zustand des Werkzeugs an dieses herangefahren werden, um eine möglichst effektive Beheizung des relevanten Teils des äußeren Schulterteils zu erreichen. Besonders bevorzugt sind die Induktionsmittel so ausgebildet, beispielsweise durch Auslegung und Beeinflussung der räumlichen Abstrahlcharakteristik, dass gezielt und begrenzt der Teil des äußeren Schulterteils beheizt/erwärmt wird, in dem der axiale Endabschnitt des Tubenkörpers vom äußeren Schulterteil kontaktiert wird.

Es ist dabei, wie oben bereits ausgeführt, erfindungsgemäß vorgesehen, dass andere Bereiche und andere Abschnitte des mehrteiligen Formgebungswerkzeuges, wie beispielsweise mehrteilige Gewindebacken der Matrize, die Patrize und/oder ein Endabschnitt der Matrize weiterhin mit Kühleinrichtungen versehen sind, um nach dem Auftragen des Vorformlings und dem Verschließen des Formgebungswerkzeuges eine möglichst rasche Abkühlung des durch Verpressen hergestellten Tubenkopfes zu erreichen.

Bei dem Formgebungswerkzeug kann es sich beispielsweise um ein mehrteiliges Werkzeug aus einem Stahl- oder Edelstahlmaterial oder aus einer kupferbasierten oder kupferhaltigen Legierung handeln. Die einzelnen Bestandteile des mehrteiligen Formgebungswerkzeugs kann z.B. eine Patrize zum Aufstecken oder Führen des Tubenkörpers sowie zum Ausbilden einer Innenkontur des Tubenkopfes ein einteiliges oder mehrteiliges, äußeres Schulterteil, ein, bevorzugt mehrteiliges, äußeres Kopfteil oder Gewindeteil sowie ein äußeres Endteil, bevorzugt mit einem vertikal verschiebbaren Stift für die Ausbildung einer Auslassöffnung im Tubenkopf (Orifice Pin) umfassen. Es sind aber auch andere Ausbildungen und Aufteilungen des mehrteiligen Formgebungswerkzeuges möglich. Erfindungsgemäß soll hierbei jedoch realisiert werden, dass ein äußeres Schulterteil des Formgebungswerkzeugs, welches für sich genommen nicht zwingend separat oder getrennt von anderen Teilen oder Bereichen des Formgebungswerkzeugs ausgebildet sein muss, welches jedoch so in das Formgebungswerkzeug integriert ist, dass es im geschlossenen Zustand, bevorzugt radial außen, benachbart zu einem axialen Endabschnitt des Tubenkörpers angeordnet ist oder angeordnet wird eine, bevorzugt aktive Heizeinrichtung aufweist, die dafür sorgt, dass der axiale Endabschnitt des Tubenkörpers bei einer Annäherung an das äußere Schulterteil und/oder bei einem Kontakt mit dem äußeren Schulterteil erwärmt wird.

Der Vorformling kann bevorzugt als geschmolzenes Polymermaterial, beispielsweise in Ringform oder in Form eines Donuts zentral aus einem Extruder auf eine Patrize aufgesetzt werden, die auch den Tubenkörper hält oder führt. Beispielsweise kann der Vorformling HDPE umfassen oder aus diesem bestehen.

Der Tubenkörper kann beispielsweise ein zu einer Rohrform umgeformtes, tubenförmiges Material umfassen, welches eine Schweißnaht entlang einer Längsrichtung aufweist

Die Ausgestaltung der Hülleinrichtung und die Ausgestaltung der Heizeinrichtung wird weiter unten noch im Detail erläutert. Es kann jedoch vorteilhaft vorgesehen sein, dass die Kühleinrichtungen des mehrteiligen Formgebungswerkzeugs zumindest Kühlkanäle in dem Werkzeug oder in Teilen des Formgebungswerkzeugs umfassen, durch die ein Kühlmedium, beispielsweise ein Kühlfluid gefördert wird, dem von einer, bevorzugt von der Kühleinrichtung umfassten Wärmetauschereinheit Wärme entzogen wird, bevor es in die Kühlkanäle eingebracht wird und/oder nachdem es aus den Kühlkanälen des Formgebungswerkzeuges herausgeführt wird. Besonders bevorzugt kann die Kühleinrichtung oder die Kühleinrichtungen ein Kühlkreislauf mit einem entsprechenden Wärmetauscher ausbilden.

In einer vorteilhaften Ausführungsform der Vorrichtung kann vorgesehen, sein, dass die Heizeinrichtung so angeordnet ist, dass im geschlossenen Zustand des Formgebungswerkzeugs in einer axialen Richtung ein Überlappungsbereich zwischen dem axialen Endabschnitt des Tubenkörpers und der Heizeinrichtung ausgebildet ist. Es kann auch vorteilhaft vorgesehen sein, dass die Heizeinrichtung nur in dem Überlappungsbereich angeordnet ist. Es kann jedoch auch vorgesehen sein, dass sich die Heizeinrichtung in axialer Richtung über den Überlappungsbereich hinaus erstreckt, sodass die Heizeinrichtung in axialer Richtung auch in Bereichen jenseits des axialen Endabschnitts des Tubenkörpers angeordnet ist.

Durch diese Anordnung der Heizeinrichtung wird in besonders vorteilhafter Weise erreicht, dass die Wärme möglichst gezielt und möglichst lokal auf den axialen Endabschnitt des Tubenkörpers wirkt oder einwirkt und diesen erwärmt und gleichzeitig andere Bereiche des Formgebungswerkzeugs und/oder des Tubenkopfes nicht oder nicht wesentlich erwärmt sowie die dort gegebenenfalls vorgesehene Kühlung oder Kühleinrichtung nicht oder nur unwesentlich abschwächt.

In einer vorteilhaften Ausführungsform weist das äußere Schulterteil nur wenigstens eine Heizeinrichtung und keine Kühleinrichtung auf. So kann die vorhergehend beschriebene, überlappende Heizeinrichtung einfach und damit kostengünstig realisiert werden. Auch wird der Gesamtenergieaufwand dadurch gering gehalten oder minimiert, dass das Schulterteil nicht abschnittsweise geheizt und in anderen Abschnitten gekühlt werden muss.

In einer weiteren vorteilhaften Ausführungsform der Vorrichtung kann vorgesehen sein, dass das äußere Schulterteil in einem ersten Abschnitt eine Kühleinrichtung und in einem zweiten Abschnitt eine Heizeinrichtung aufweist. Damit wird vorteilhaft ermöglicht die Temperaturen der Matrize gezielt an den Bedarf der jeweiligen Bearbeitungsbereiche anzupassen. Im unteren Bereich des äußeren Schulterteils, an dem die Verschweißung des Tubenkopfs mit dem Tubenrohr vorgenommen wird, herrschen hohe oder höhere Temperaturen, was die Verschweißung unterstützt. Demgegenüber kann das verpresste Material des Vorformlings im oberen Bereich des Schulterteils, durch das an dieser Stelle gekühlte Schulterteil, schneller erstarren.

In einer besonders vorteilhaften Ausführungsform kann vorgesehen sein, dass zwischen dem ersten Abschnitt und dem zweiten Abschnitt ein Isolierabschnitt im äußeren Schulterteil ausgebildet ist. Auf diese Weise wird der Energiebedarf für die Beheizung und Kühlung der Vorrichtung, im Vergleich zur Ausführung ohne Isolierbereich, gesenkt. Durch die thermische Isolierung zwischen den temperierten Bereichen des Schulterstücks, wird auch verhindert, dass diese beiden Bereiche in sich deutlich variierende Temperaturen annehmen und so die Bearbeitung der Tube nicht überall in den temperierten Bereichen bei den gewünschten Temperaturen erfolgt. Mit anderen Worten beschrieben, würde sich ohne Isolierung ein stetiger und deutlicher Temperaturverlauf von heiß nach kalt zwischen den Bereichen ausbilden, so dass nicht in den jeweils ganzen Bereichen die gewünschten Temperaturen vorherrschen.

In einer weiteren vorteilhaften Ausführungsform ist die Vorrichtung so ausgeführt, dass die Kühleinrichtungen in Werkzeugteile des Formgebungswerkzeugs eingebrachte Kühlfluidkanäle und damit fluidleitend verbundene Leitungsmittel umfassen, die zur Zirkulation eines Kühlfluids eingerichtet sind. Das ist eine vorteilhafte Lösung, weil sich Wärme mit Fluiden gut und insbesondere gezielt abführen lässt, wie es beispielsweise auch Kühlanlagen von Verbrennungsmotoren zeigen.

In einer weiteren vorteilhaften Ausführungsform ist die Vorrichtung so ausgeführt, dass die Heizeinrichtung in das äußere Schulterteil eingebrachte Wärmefluidkanäle und damit fluidleitend verbundene Leitungsmittel umfasst, die zur Zirkulation eine Wärmefluids eingerichtet sind. Dadurch lässt sich die Wärme gezielt bereitstellen. Wenn die Kühleinrichtung(en) bereits entspechend fluidbasiert ausgebildet sind, kann zudem auf bestehende Infrastruktur zurückgegriffen werden, auch wenn die Kreisläufe des Wärmefluids und des Kühlfluids natürlich getrennt ausgebildet werden müssen. Fluidbasierte Lösungen zur Temperierung von Formwerkzeugen in der Kunststoffbearbeitung sind bewährt und marktüblich.

In einer weiteren vorteilhaften Ausführungsform ist die Vorrichtung so ausgeführt, dass die Heizeinrichtung in das äußere Schulterteil eingebrachte elektrische Heizmittel und damit elektrisch verbundene Leitungsmittel umfasst, die zur elektrischen Versorgung der Heizmittels eingerichtet sind. Alternativ dazu ist die Vorrichtung so ausgeführt, dass sie induktiv beheizt werden kann. Die elektrische oder induktive Beheizung kann vorteilhaft sein, weil sie sich als direkte Beheizung des Werkzeugs schneller, einfacher und präziser regeln lässt, als die indirekte Beheizung mittels eines Wärmefluids. Sie lässt sich auch schneller ausschalten, als eine Beheizung mittels Wärmefluid, bei welcher das heiße Fluid in den Kanälen die Vorrichtung nachheizt, auch wenn die Fluidzirkulation abgestellt ist. Die Beheizung kann so auch sehr oberflächennah ausgeführt werden, was die Regelbarkeit der Temperatur im Bearbeitungsraum der Vorrichtung weiter verbessert. Es entfallen weiterhin die für einen Flüssigkeitskreislauf nötigen Komponenten, wie Pumpe, Vorrats- und/oder Ausgleichsbehälter, Sensorik zur Überwachung eines Wärmefluidaustritts etc. Die Ausführung der Erfindung mit einer elektrischen Beheizung erfordert auch weniger Wartung, weil kein Wärmefluid ersetzt werden muss und weil keine beweglichen Leitungselemente oder Ventile, Pumpen etc. verschleißen können.

In einer weiteren vorteilhaften Ausführungsform ist die Vorrichtung so ausgeführt, dass sie ein, eine zweite Bearbeitungsstation ausbildendes, mehrteiliges Nachpresswerkzeug mit einem, bevorzugt einteiligen, Kopfteil, wobei das Kopfteil in einem geschlossenen Zustand des Nachpresswerkzeugs auch benachbart zu einem axialen Endabschnitt des Tubenkörpers angeordnet ist und eine Kühleinrichtung umfasst, die auch zur Kühlung des axialen Endabschnitts des Tubenkörpers eingerichtet ist. Mit diesem gekühlten Nachpresswerkzeug wird das Erstarren des Tubenmaterials beschleunigt und sichergestellt, dass es in jeder der unzähligen Wiederholungen des Vorgangs gleichbleibend und in der gewünschten Form erstarrt.

Diese Form ist beispielsweise für die Funktion des Gewindes besonders bedeutsam. Auf den Schulterbereich kann mit dem Nachpresswerkzeug beim Abkühlen weiter Druck aufgebracht werden, so dass insbesondere die Schweißnaht unter kontrollierten Bedingungen erstarrt und so die Qualität der Schweißverbindung gleichbleibend sichergestellt ist.

Während die vorliegende Erfindung zunächst eine Vorrichtung umfasst, welches die vorbeschriebenen Vorteile realisieren kann, ist es gleichwohl von der Erfindung umfasst, auch ein Betriebsverfahren vorzusehen, welches insbesondere den Betrieb des erfindungsgemäßen Werkzeugs, jedoch prinzipiell auch über diesen hinaus und unabhängig ein vorteilhaftes Verfahren zur Herstellung einer Verpackungstube, bestehend aus Tubenkopf und Tubenkörper, beschreibt.

Es ist im Zusammenhang mit dem erfindungsgemäßen Verfahren vorgesehen in folgender Reihenfolge oder Abfolge von Verfahrensschritten vorzugehen:
Einbringen eines Vorformlings und eines Tubenkörpers in das geöffnete, mehrteilige Formgebungswerkzeug, welches die erste Bearbeitungsstation bildet. Danach wird das Werkzeug verschlossen und bei diesem Übergang der Tubenkopf aus dem Vorformling ausgeformt und die Verbindung des Tubenkopfes mit dem Tubenkörper hergestellt. Das Formgebungswerkzeug enthält Kühleinrichtungen, mit denen es zumindest im geschlossenen Zustand gekühlt wird und es umfasst ein äußeres Schulterteil, welches beim Verschließen des Formgebungswerkzeugs bevorzugt radial außen und benachbart zu einem axialen Endabschnitt des Tubenkörpers angeordnet wird. Dieses äußere Schulterteil umfasst eine Heizeinrichtung oder wird von außen beheizt, so dass einerseits der axiale Endabschnitt des Tubenkörpers bei der Annäherung an das Schulterteil und/oder bei dem Kontakt mit dem Schulterteil erwärmt wird und andererseits die Abkühlung des einfließenden Schultermaterials im Bereich des axialen Endabschnitts des Tubenkörpers verlangsamt wird.

In einer vorteilhaften Erweiterung des erfindungsgemäßen Verfahrens kann nach der Formgebung die Überführung des Werkstücks, bestehend aus Tubenkörper und dem daran angeformten und so damit verbundenen Tubenkopf, von der ersten Bearbeitungsstation in ein Nachpresswerkzeug als zweite Bearbeitungsstation folgen. Ein Kopfteil des Nachpresswerkzeugs liegt im geschlossenen Zustand benachbart zu einem axialen Endabschnitt des Tubenkörpers und kühlt diesen mittels der im Kopfteil angeordneten Kühleinrichtung. Besonders bevorzugt wird dabei der Schulterabschnitt des Kopfteils gekühlt. Das Nachpresswerkzeug kann wie auch das Formgebungswerkzeug ein mehrteiliges Werkzeug, zum Beispiel aus Edelstahl oder aus einer kupferhaltigen Legierung, umfassen, das weiter bevorzugt wenigstens in einen geschlossenen Zustand und in einen geöffneten Zustand überführt werden kann. Im geöffneten Zustand kann eine im Formgebungswerkzeug hergestellte und aus dieser entnommene Tube aufgenommen und entnommen werden. Dazu können einzelne Teile des Nachpresswerkzeugs beweglich oder verschiebbar ausgebildet sein.

In einer zweiten vorteilhaften Erweiterung des erfindungsgemäßen Verfahrens kann die Heizeinrichtung des Formgebungswerkzeugs so angeordnet sein, dass sich in axialer Richtung ein Überlappungsbereich zwischen dem axialen Endabschnitt des Tubenkörpers und der Heizeinrichtung ausgebildet wird.

Weitere Vorteile, Merkmale und Einzelheiten der Erfindung werden nachfolgend beispielhaft anhand der schematischen Zeichnungen beschrieben. Diese zeigen in:
Fig. 1: eine Schnittdarstellung eines Formgebungswerkzeugs zur Herstellung einer Kunststofftube nach dem Stand der Technik
Fig. 2: eine Schnittdarstellung durch eine Patrize des Formgebungswerkzeugs mit eingelegtem Tubenkörper und aufgetragenem Vorformling
Fig. 3: eine Schnittdarstellung durch ein Formgebungswerkzeug der erfindungsgemäßen Vorrichtung zur Herstellung einer Kunststofftube in einer ersten Ausführungsform
Fig. 4: eine Schnittdarstellung durch ein Formgebungswerkzeug einer erfindungsgemäßen Vorrichtung in einer zweiten Ausführungsform
Fig. 5: eine Schnittdarstellung durch ein Formgebungswerkzeug einer erfindungsgemäßen Vorrichtung in einer dritten Ausführungsform
Fig. 6: eine Schnittdarstellung durch ein Formgebungswerkzeug einer erfindungsgemäßen Vorrichtung in einer vierten Ausführungsform
Fig. 7a: eine Schnittdarstellung durch ein Formgebungswerkzeug einer erfindungsgemäßen Vorrichtung während des erfindungsgemäßen Verfahrens zu einem ersten Zeitpunkt
Fig. 7b: eine Schnittdarstellung durch ein Formgebungswerkzeug einer erfindungsgemäßen Vorrichtung während des erfindungsgemäßen Verfahrens zu einem späteren Zeitpunkt
Fig. 7c: ein vergrößerter Ausschnitt der Darstellung der Fig. 7b, welcher die Verbindung von Tubenkörper und Tubenkopf zeigt
Fig. 8: eine Schnittdarstellung eines Teils eines Nachpresswerkzeugs zur Herstellung einer Kunststofftube

Die Darstellungen sind schematisch und vereinfacht dargestellt, so sind beispielsweise Mittel zum Bewegen und Halten der Werkzeugteile nicht gezeigt. Gleiche Elemente oder Merkmale sind mit gleichen Bezugszeichen versehen

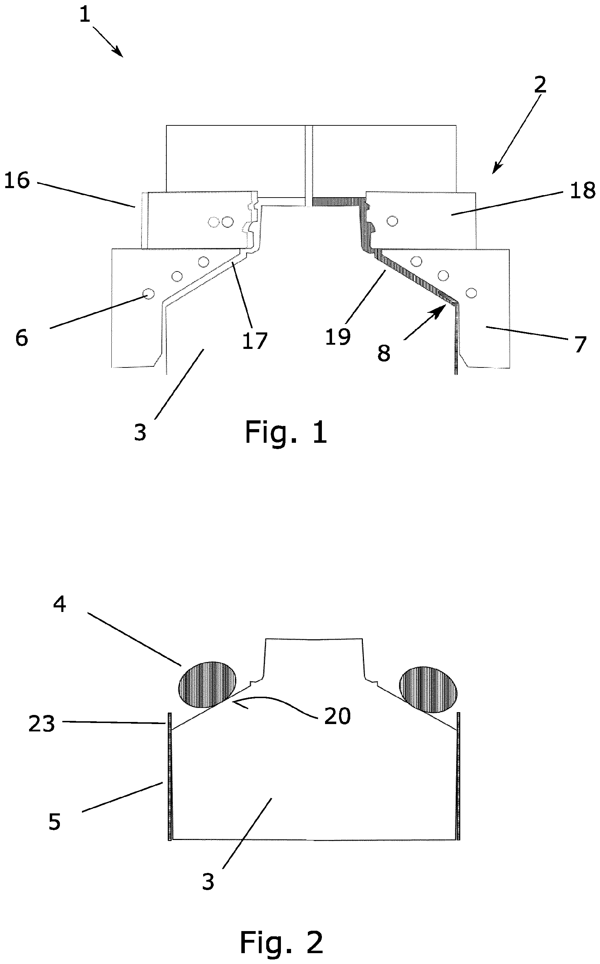

Die Fig. 1 zeigt die Schnittdarstellung eines mehrteiligen Formgebungswerkzeugs 1 gemäß dem Stand der Technik, bestehend aus der mehrteiligen Matrize 2 und der Patrize 3.

Durch die Strichlinie 16, die nur in der linken Hälfte der Darstellung gezeigt ist, ist dargestellt, dass die Matrize im Halsbereich beweglich ist. Dies erlaubt das Überführen des Formgebungswerkzeugs 1 in einen geschlossenen und einen geöffneten Zustand. Der Ablauf zum Schließen und Öffnen des Formgebungswerkzeugs 1 ist wie folgt: Halsbereich schließen, wie durch Strichlinie 16 angedeutet, dann Matrize 2 und Patrize 2 relativ zueinander linear annähern, Halsbereich öffnen und danach Matrize 2 und Patrize 2 relativ zueinander linear entfernen. Die Beweglichkeit der Matrize im Halsbereich ist entscheidend, damit die hergestellte Kunststofftube 19 aus dem Formgebungswerkzeug 1 entnommen werden kann, ohne Bereiche der Kunststofftube mit Hinterschneidungen zu zerstören. In dem geschlossenen Zustand wird zwischen den Teilen des Formgebungswerkzeugs 1 eine Kavität oder ein Hohlraum 17 ausgebildet, in dem/der der Tubenkopf ausgeformt und mit dem Tubenkörper verbunden werden kann. In dem nicht explizit gezeigten aber angedeuteten geöffneten Zustand des Formgebungswerkzeugs 1 kann zu Beginn des Verfahrens der Tubenkörper über die Patrize 3 gestreift werden. Nach Beendigung des Verfahrens kann im geöffneten Zustand des Formgebungswerkzeugs 1 die Tube hier entformt oder entnommen werden. In einem Halsbereich 18 ist die Matrize mit der Kühleinrichtung 6 gekühlt. Das gleiche gilt für das äußere Schulterteil 7 und für die Patrize 3 (nicht dargestellt). Die Kühleinrichtungen können konturnahe Kühlkanäle umfassen und mit einem Kühlfluid beaufschlagbar sein, um Wärme aus den jeweiligen Teilen des Formgebungswerkzeugs abzuführen. Dadurch wird die Erstarrung des Vorformlings beschleunigt. Gleichzeitig wird aber eine hohe Starttemperatur oder Anfangstemperatur des Vorformlings benötigt.

In der rechten Hälfte zeigt Figur 1 den Querschnitt der Tube 19 nach der Bearbeitung. Zur Herstellung der Tube wird, wie in Figur 2 gezeigt, der kalte Tubenkörper 5 und der heiße Vorformling 4 in das geöffnete Formgebungswerkzeug 1 eingebracht. Das Formgebungswerkzeug 1 wird verschlossen bzw. in den geschlossenen Zustand überführt und verpresst dabei den plastischen Vorformling 4. Somit wird der Tubenkopf der Tube aus dem Vorformling geformt. Durch die hohe Temperatur des Vorformlings wird im Überlappungsbereich 8 zum Tubenkörper eine Schweißverbindung mit diesem hergestellt. Die gekühlte Matrize und Patrize kühlen die Tube, so dass das Material fest wird und die Tube aus dem Formgebungswerkzeug entnommen werden kann, nachdem dieses wieder in den geöffneten Zustand überführt wurde. Nachteilig ist hier, dass der Vorformling so heiß eingebracht werden muss, dass die Temperatur ausreicht, um die Schweißverbindung herzustellen, bevor die gekühlten Werkzeugteile die Wärme abgeführt haben.

Die Fig. 2 zeigt, wie bereits erwähnt, wie der Tubenkörper 5 und der Vorformling 4, sowohl im Stand der Technik als auch bei der Erfindung, zur Bearbeitung eingebracht werden. Der rohrförmige Tubenkörper 5 wird dabei auf die zylindrische Patrize 3 geschoben und der Vorformling 4 wird zentriert auf den Kragen 20 gelegt. Um die Patrize 3 herum ist der rohrförmige Tubenkörper 5 (horizontal schraffiert) zu sehen und auf dem Kragen 20 der Patrize 3 liegt der ringförmige Vorformling 4, auch Donut genannt, auf. Der Vorformling 4 kann beispielsweise aus einem Extruder mit einer ringförmigen Öffnung (nicht dargestellt) ausgegeben oder aufgetragen werden.

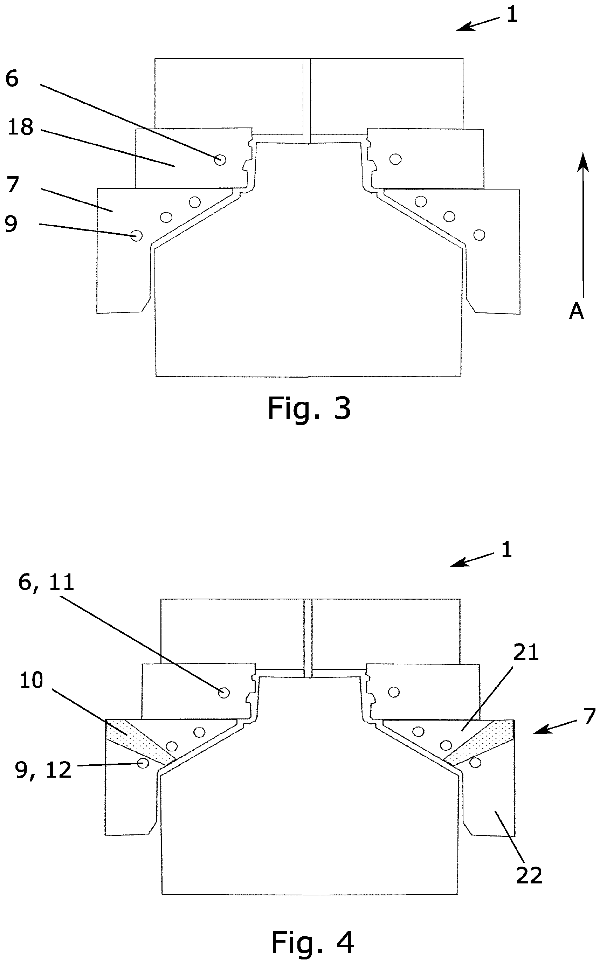

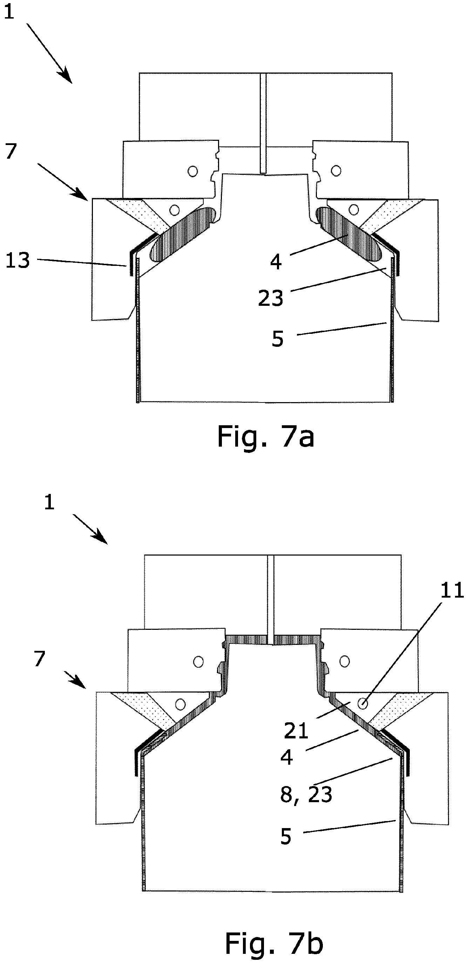

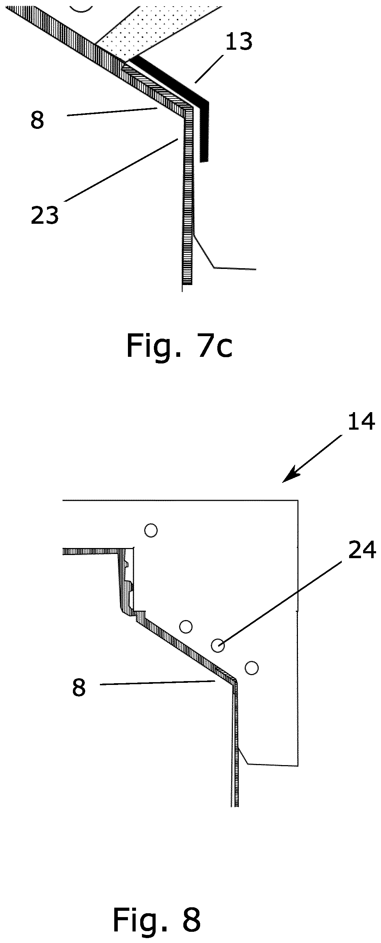

Die Fig. 3 zeigt eine erste Ausführungsform des Formgebungswerkzeugs 1 der erfindungsgemäßen Vorrichtung mit einer Kühleinrichtung 6, beispielsweise im Halsbereich 18 und der Heizeinrichtung 9 im äußeren Schulterteil 7. Die Heizeinrichtung 9 ist so positioniert, dass der Überlappungsbereich 8 beheizt wird, der im geschlossenen Zustand des Formgebungswerkzeug 1 mit dem axialen Endabschnitt (vgl.: Figuren 7b und 7c) des Tubenkörpers (23) in axialer Richtung A überlappt. Mit der Heizeinrichtung 9, die ebenfalls konturnahe Heizkanäle umfassen kann, wird das Verschweißen des Vorformlings mit dem Tubenkörper erleichtert, da einerseits der Randabschnitt des Tubenrohrs vorgeheizt wird und andererseits der Vorformling in diesem Bereich weniger schnell abkühlt, so dass der Vorformling mit geringerer Temperatur ins Werkzeug eingebracht werden kann. Das hat die nachfolgend nicht abschließend angeführten vorteiligen Effekte, thermische Zersetzungsprozesse im Kunststoff des Vorformlings im Extruder werden stark verlangsamt oder sogar verhindert, es muss weniger Energie zum Beheizen und Abkühlen aufgewendet werden und die Abkühlzeit für das Erreichen einer Zieltemperatur in den gekühlten Bereichen wird verkürzt, so dass die Taktzeit gesenkt werden kann. Dadurch wird eine schonendere und energieeffizientere Verarbeitung ermöglicht.

Die Fig. 4 zeigt eine zweite vorteilhafte Ausführungsform des Formgebungswerkzeugs 1. Eine Kühleinrichtung 6 im Schulterteil 7 ist mittels der Kühlfluidkanäle 11 ausgeführt und eine Heizeinrichtung 9 im Schulterteil 7 ist durch Heizfluidkanäle 12 verwirklicht. Zwischen dem gekühlten, ersten Abschnitt 21 und dem beheizten, zweiten Abschnitt 22 des Schulterteils 7 liegt ein Isolierabschnitt 10. Der Isolierabschnitt 10 kann beispielsweise durch ein separates thermisch isolierendes Material ausgebildet sein. Alternativ kann der Isolierabschnitt durch eine Material-oder Gefügeveränderung des Materials des Schulterteils 7 realisiert werden. Vorteilhaft daran ist, dass sich durch die thermische Isolierung die temperierten Abschnitte nicht oder nur minimal gegenseitig beeinflussen, was den Energieaufwand zur Temperierung verringert und in den Abschnitten für eine gleichmäßigere Temperatur sorgt.

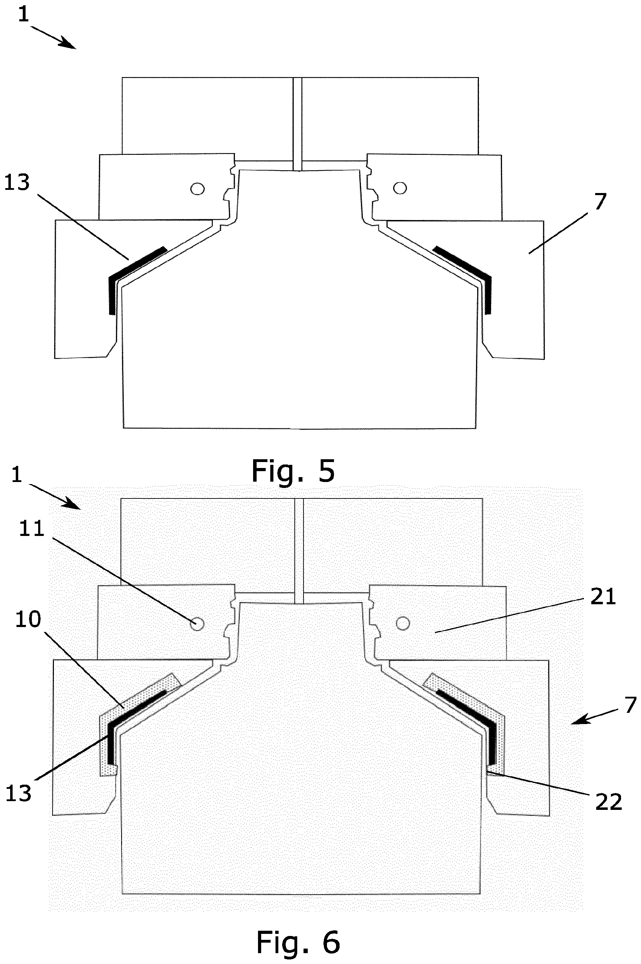

Die Fig. 5 zeigt eine dritte vorteilhafte Ausführungsform des Formgebungswerkzeugs 1. Die Heizeinrichtung des Schulterteils 7 ist als elektrisches Heizmittel 13 ausgeführt. Die Ausführungsform mit den elektrischen Heizmitteln 13 kann auch mit der Ausführungsform der Fig. 4 kombiniert werden, in der ein Isolierabschnitt und/oder eine Kühleinrichtung im Schulterteil 7 ausgebildet ist (vgl. Figur 6). Die elektrischen Heizmittel können zum Beispiel Heizwiderstände umfassen, die bei einer Bestromung Wärme erzeugen und abgeben.

Die Fig. 6 zeigt eine vierte vorteilhafte Ausführungsform des Formgebungswerkzeugs 1. Die Heizeinrichtung ist als elektrische Heizmittel 13 ausgeführt, wobei der beheizte, zweite Abschnitt 22 des Werkzeugs durch den Isolierabschnitt 10 vom gekühlten, ersten Abschnitt 21 des Schulterteils 7 mit den Kühlfluidkanälen 11 thermisch entkoppelt ist. Diese Ausführungsform kombiniert also die Vorteile der beiden vorstehenden Ausführungsformen.

Die Fig. 7a zeigt ein Formgebungswerkzeug 1 während des erfindungsgemäßen Verfahrens. Der in der Figur 7a dargestellte Verfahrensschritt kann an den Verfahrensschritt anschließen, der in der Figur 2 dargestellt ist. Das Formgebungswerkzeug 1 wird in der Darstellung der Figur 7a in den geschlossenen Zustand überführt. Der Vorformling 4 ist schon teilweise verpresst, während der Tubenkörper 5, insbesondere der axiale Endabschnitt 23 noch nicht in den Überlappungsbereich 8 umgeformt oder umgefalzt ist. Es wird deutlich, dass der geometrisch komplexe Kopfteil (beispielsweise ein Außengewinde aufweisend) durch eine plastische Verformung des heißen Vorformlings hergestellt wird. Bereits in der Situation der Figur 7a kann durch die Annäherung zwischen der Heizeinrichtung 13 und/oder dem Schulterteil 7 und des axialen Endabschnitts 23 des Tubenkörpers 5 eine Wärmeübertragung und eine Vorwärmung des axialen Endabschnitts 23 stattfinden. Mit zunehmender Nähe des axialen Endabschnitts 23 und dem Schulterteil 7 und/oder der Heizeinrichtung 13 wird die Wärmeübertragung verbessert und erhöht.

Die Fig. 7b zeigt ein Formgebungswerkzeug 1 im geschlossenen Zustand während des erfindungsgemäßen Verfahrens. Der Vorformling 4 ist vollständig umgeformt und der axiale Endabschnitt 23 des Tubenkörpers 5 ist in den Überlappungsbereich 8 umgefalzt. Der erste Abschnitt 21 des äußeren Schulterstücks 7 wird mittels der Kühlfluidkanäle 11 gekühlt, und so die Erstarrung des umgeformten Vorformlings 8 beschleunigt. Der Überlappungsbereich 8 wird in Fig. 7c in vergrößerter Darstellung gezeigt.

Die Fig. 7c zeigt einen vergrößerten Ausschnitt des Überlappungsbereichs 8 im Formgebungswerkzeugerkzeug. Die elektrischen Heizmittel 13 beheizen gezielt diesen Bereich, in dem auch der axiale Endabschnitt 23 des Tubenkörpers angeordnet ist, so dass die Herstellung der Schweißverbindung zwischen, zum Tubenkopf umgeformten, Vorformling und Tubenkörper unterstützt wird.

Die Figur 8 zeigt ein Nachpresswerkzeug 14, welches Teil einer zweiten Bearbeitungsstation der erfindungsgemäßen Vorrichtung sein kann. Das Formgebungswerkzeug 1 der Figuren 1 bis 7c ist vorteilhaft Teil einer ersten Bearbeitungsstation der Vorrichtung. Das Nachpresswerkzeug kann, ähnlich wie das Formgebungswerkzeug in einen geöffneten und einen geschlossenen Zustand überführt werden, wobei im geöffneten Zustand ein Einfügen und entnehmen einer Tube und im geschlossenen Zustand ein Kühlen der Tube, bevorzugt des Tubenkopfes ermöglicht wird.

Das Nachpresswerkzeug 14 kann mittels Kühlfluid gekühlt werden, das durch die konturnahen Kühlfluidkanäle 24 geführt wird. Durch die Kühlung des Nachpresswerkzeugs 14 wird das Abkühlen und Erstarren der vorangehend geformten Tube, insbesondere des Tubenkopfes beschleunigt und kontrolliert. Durch den Druck auf die Tube, insbesondere auf die Schweißverbindung im Überlappungsbereich 8, wird sichergestellt, dass die Tube in der gewünschten Form erstarrt und die Schweißverbindung sicher verbunden bleibt, bis sie ausreichend kalt und damit fest ist.

### Bezugszeichenliste

- 1.: Formgebungswerkzeug
- 2.: Mehrteilige Matrize
- 3.: Patrize / Stempel
- 4.: Vorformling (vertikal schraffiert)
- 5.: Tubenkörper (horizontal schraffiert)
- 6.: Kühleinrichtung des Formgebungswerkzeugs
- 7.: Äußeres Schulterteil
- 8.: Überlappungsbereich von Vorformling und Tubenkörper
- 9.: Heizeinrichtung
- 10.: Isolierabschnitt
- 11.: Kühlfluidkanäle
- 12.: Wärmefluidkanäle
- 13.: Elektrische Heizmittel
- 14.: Nachpresswerkzeug
- 15.: Kühleinrichtung des Nachpresswerkzeugs
- 16.: Strichlinie, die Beweglichkeit der Matrize zeigt
- 17.: Hohlraum/Kavität der Formgebungsvorrichtung
- 18.: Halsbereich der Matrize
- 19.: Hergestellte Kunststofftube
- 20.: Kragen der Patrize
- 21.: Gekühlter, erster Abschnitt des Formgebungswerkzeugs
- 22.: Beheizter, zweiter Abschnitt des Formgebungswerkzeugs
- 23.: Axialer Endabschnitt des Tubenkörpers
- 24.: Kühlfluidkanäle des Nachpresswerkzeugs Axiale Richtung A

## Patentansprüche

1. Vorrichtung zum Ausbilden eines Tubenkopfes durch Verpressen eines Vorformlings (4) und Verbinden des Tubenkopfes mit einem Tubenkörper (5) zur Herstellung einer Verpackungstube, mit einem eine erste Bearbeitungsstation ausbildenden mehrteiligen Formgebungswerkzeug (1), insbesondere umfassend eine Patrize (3) und eine mehrteilige Matrize (2), in welches in einem geöffneten Zustand ein Vorformling (4) und ein Tubenkörper (5) einbringbar ist und welches bei einem Übergang in einen geschlossenen Zustand den Tubenkopf aus dem Vorformling (4) ausformt und die Verbindung mit dem Tubenkörper (5) herstellt, wobei das Formgebungswerkzeug Kühleinrichtungen (6) aufweist, mit denen Teile des Formgebungswerkzeugs (1) kühlbar sind, wobei das Formgebungswerkzeug (1) ferner ein äußeres Schulterteil (7) umfasst, welches in dem geschlossenen Zustand, bevorzugt radial außen, benachbart zu einem axialen Endabschnitt (23) des Tubenkörpers (5) angeordnet ist,
**dadurch gekennzeichnet,**
**dass** das äußere Schulterteil (7) eine Heizeinrichtung (9, 12, 13) aufweist oder von außen beheizt werden kann, so dass der axiale Endabschnitt (23) des Tubenkörpers (5) bei einer Annäherung an das äußere Schulterteil (7) und/oder bei einem Kontakt mit dem äußeren Schulterteil (7) erwärmt wird.

2. Vorrichtung nach, Anspruch 1
**dadurch gekennzeichnet,**
**dass** die Heizeinrichtung (9) so angeordnet ist, dass im geschlossenen Zustand in einer axialen Richtung (A) ein Überlappungsbereich zwischen dem axialen Endabschnitt des Tubenkörpers (23) und der Heizeinrichtung (9) ausgebildet ist.

3. Vorrichtung nach Anspruch 1 oder 2,
**dadurch gekennzeichnet,**
**dass** das äußere Schulterteil (7) nur wenigstens eine Heizeinrichtung und keine Kühleinrichtung aufweist.

4. Vorrichtung nach einem der vorangehenden Ansprüche,
**dadurch gekennzeichnet,**
**dass** das äußere Schulterteil (7) in einem ersten Abschnitt (21) eine Kühleinrichtung und in einem zweiten Abschnitt (22) eine Heizeinrichtung aufweist.

5. Vorrichtung nach, Anspruch 4
**dadurch gekennzeichnet,**
**dass** zwischen dem ersten Abschnitt (21) und dem zweiten Abschnitt (22) ein Isolierabschnitt (10) im äußeren Schulterteil (7) ausgebildet ist.

6. Vorrichtung nach einem der vorangehenden Ansprüche,
**dadurch gekennzeichnet,**
**dass** die Kühleinrichtungen in Werkzeugteile des Formgebungswerkzeugs (1) eingebrachte Kühlfluidkanäle (11) und damit fluidleitend verbundene Leitungsmittel umfassen, die zur Zirkulation eines Kühlfluids eingerichtet sind.

7. Vorrichtung nach einem der vorangehenden Ansprüche,
**dadurch gekennzeichnet,**
**dass** die Heizeinrichtung (9) in das äußere Schulterteil (7) eingebrachte Wärmefluidkanäle (12) und damit fluidleitend verbundene Leitungsmittel umfasst, die zur Zirkulation eine Wärmefluids eingerichtet sind.

8. Vorrichtung nach einem der Ansprüche 1 bis 7,
**dadurch gekennzeichnet,**
**dass** die Heizeinrichtung in das äußere Schulterteil eingebrachte elektrische Heizmittel (13) und damit elektrisch verbundene Leitungsmittel umfasst, die zur elektrischen Versorgung der Heizmittels eingerichtet sind.

9. Vorrichtung nach einem der vorangehenden Ansprüche,
**gekennzeichnet durch**
ein, eine zweite Bearbeitungsstation ausbildendes, mehrteiliges Nachpresswerkzeug (14) mit einem, bevorzugt einteiligen, Kopfteil, wobei das Kopfteil in einem geschlossenen Zustand des Nachpresswerkzeugs (14) auch benachbart zu einem axialen Endabschnitt des Tubenkörpers (23) angeordnet ist und eine Kühleinrichtung (15) umfasst, die auch zur Kühlung des axialen Endabschnitts des Tubenkörpers (23) eingerichtet ist.

10. Verfahren zur Ausbildung eines Tubenkopfes durch Verpressen eines Vorformlings und Verbinden des Tubenkopfes mit einem Tubenkörper zur Herstellung einer Verpackungstube, umfassend die Verfahrensschritte:
Einbringen eines Vorformlings und eines Tubenköpers in ein, eine erste Bearbeitungsstation ausbildendes, mehrteiliges Formgebungswerkzeug in geöffnetem Zustand
- Verschließen des Formgebungswerkzeugs, wobei bei einem Übergang in einen geschlossenen Zustand der Tubenkopf aus dem Vorformling ausgeformt und die Verbindung mit dem Tubenkörper hergestellt wird, wobei das Formgebungswerkzeug Kühleinrichtungen aufweist, mit denen Teile des Formgebungswerkzeugs, zumindest im geschlossenen Zustand gekühlt werden, wobei das Formgebungswerkzeug ein äußeres Schulterteil umfasst, welches beim Verschließen des Formgebungswerkzeugs, bevorzugt radial außen, benachbart zu einem axialen Endabschnitt des Tubenkörpers angeordnet ist,
**dadurch gekennzeichnet,**
**dass** der axiale Endabschnitt des Tubenkörpers bei einer Annäherung an das äußere Schulterteil und/oder bei einem Kontakt mit dem äußeren Schulterteil, bevorzugt mit einer vom äußern Schulterteil umfassten Heizeinrichtung, erwärmt wird.

11. Verfahren nach, Anspruch 10
**gekennzeichnet durch**
der mit dem Tubenköper verbundene Tubenkopf aus der ersten Bearbeitungsstation in eine zweite Bearbeitungsstation überführt wird und mit einem von der zweiten Bearbeitungsstation umfasstes mehrteiliges Nachpresswerkzeug bearbeitet wird, wobei ein Kopfteil in einem geschlossenen Zustand des Nachpresswerkzeugs mit einer benachbart zu einem axialen Endabschnitt des Tubenkörpers im Kopfteil angeordneten Kühleinrichtung den axialen Endabschnitt des Tubenkörpers kühlt.

12. Verfahren nach Anspruch 10 oder 11,
**dadurch gekennzeichnet,**
**dass** die Heizeinrichtung so angeordnet ist, dass beim Schließen des Formgebungswerkzeugs in einer axialen Richtung ein Überlappungsbereich zwischen dem axialen Endabschnitt des Tubenkörpers und der Heizeinrichtung ausgebildet wird
